# EUROPEAN PATENT APPLICATION

(11) **EP 4 443 570 A1**
(43) Date of publication of application: **09.10.2024**
(21) Application number: 24160583.1
(22) Date of filing: 29.02.2024
(51) Int. Cl.: H01M 8/04089, H01M 8/04082, H01M 8/2475, B63J 2/06

(54) **FUEL CELL SYSTEM**

(30) Priority: 10.03.2023 JP 2023037049
(71) Applicant: Yanmar Holdings Co., Ltd., Osaka-shi, Osaka (JP)
(72) Inventor: MARUYAMA, Takehiro, Osaka-shi (JP); MATSUI, Shinichiro, Osaka-shi (JP); HIRAIWA, Takuya, Osaka-shi (JP); SHINAGAWA, Manabu, Osaka-shi (JP); YUKIZANE, Fumiaki, Osaka-shi (JP); TERAGUCHI, Naoki, Osaka-shi (JP); KUBO, Takahiro, Osaka-shi (JP); MARUTANI, Yusuke, Osaka-shi (JP)
(74) Representative: Dennemeyer & Associates S.A.

(57) **Abstract**

A fuel cell system includes a fuel cell module having a fuel cell stack, a fuel gas system that supplies a fuel gas to the fuel cell stack, and a ventilation flow generator. The fuel gas system includes a fuel gas leakage risk portion. The ventilation flow generator generates a ventilation flow directed to the fuel gas leakage risk portion.

## Description

### TECHNICAL FIELD

The present invention relates to a fuel cell system.

### BACKGROUND ART

Conventionally, a fuel cell system using a plurality of fuel cell modules has been disclosed. For example, Patent Document 1 discloses an example in which a plurality of fuel cell modules are installed by multiple units at a time in each section, and each section is ventilated by one ventilation device.

### PRIOR ART DOCUMENT

### PATENT DOCUMENT

Patent Document 1: Japanese Unexamined Patent Application Publication No. 2022-26242

### SUMMARY OF INVENTION

### TECHNICAL PROBLEM

When a fuel cell system is mounted, for example, on a ship, it is required to follow various rules. For example, according to a certain rule, a section in which fuel cells are installed is defined as a specific danger zone (class 1 danger zone). Note that, as one example of the rule, Interim guidelines for the safety of ships using fuel cell power installations (IMO: International Maritime Organization) are mentioned. Further, in the rule, it is exceptionally defined that a danger zone may be determined based on a predetermined classification method on condition that competent authorities permit. In the classification method, a danger zone of an installation section is derived according to a preset classification flow, based on a condition such as a leakage frequency or a flow velocity of a ventilation flow in a portion having a fuel gas leakage risk.

Non-explosion-proof electrical equipment against a fuel gas can be installed in a safest zone (a zone where a degree of risk is negligible in a normal operation state) among danger zones in an installation section. Therefore, when it is possible to follow the rules of each country by adopting a design in which electric power supply to the electrical equipment is stopped at a time of abnormality, a non-explosion-proof fuel cell module can be installed as the electrical equipment in the safety zone.

However, a high degree of ventilation is required for the above-mentioned safety zone in view of classification. For this reason, it is necessary to reduce local generation of an area having a high fuel gas concentration within a section in which a fuel cell module is installed. In this regard, in a configuration in which a plurality of sections are ventilated by one ventilation device as described in Patent Document 1, ventilation for each section is likely to be insufficient, and an area having a high fuel gas concentration may be locally generated within each section.

The present invention has been made to solve the above problem, and an object of the present invention is to provide a fuel cell system in which an area having a high fuel gas concentration is less likely to be locally generated within a section in which a fuel cell module is installed.

### SOLUTION TO PROBLEM

A fuel cell system according to one aspect of the present invention includes a fuel cell module having a fuel cell stack, a fuel gas system that supplies a fuel gas to the fuel cell stack, and a ventilation flow generator. The fuel gas system includes a fuel gas leakage risk portion, and the ventilation flow generator generates a ventilation flow directed toward the fuel gas leakage risk portion.

### ADVANTAGEOUS EFFECTS OF INVENTION

According to the above configuration, it is possible to make it difficult for an area having a high fuel gas concentration to be locally generated within a section in which a fuel cell module is installed.

### BRIEF DESCRIPTION OF DRAWINGS

FIG. 1 is a schematic perspective view illustrating an external appearance of a fuel cell system according to an embodiment of the present invention.
FIG. 2 is a schematic diagram illustrating an internal configuration of the fuel cell system.
FIG. 3 is an explanatory diagram enlargedly illustrating a fuel module included in the fuel cell system.
FIG. 4 is a cross sectional view of a partition wall provided inside a housing of the fuel cell system.
FIG. 5 is a block diagram illustrating details of a valve device included in the fuel cell system.
FIG. 6 is an explanatory diagram of a configuration around a hydrogen supply connecting portion of the fuel cell system, when viewed from the front side of the housing.
FIG. 7 is an explanatory diagram of a configuration around the hydrogen supply connecting portion, when viewed from the right side of the housing.
FIG. 8 is an explanatory diagram schematically illustrating a configuration of main parts of the fuel cell system.
FIG. 9 is an explanatory diagram schematically illustrating another configuration of main parts of the fuel cell system.
FIG. 10 is a block diagram illustrating a configuration related to control at a time of abnormality in the fuel cell system.
FIG. 11 is a flowchart illustrating a flow of an operation by control at a time of abnormality.
FIG. 12 is a flowchart illustrating a flow of computation of a ventilating flow velocity at which a high degree of ventilation is achievable.
FIG. 13 is an explanatory diagram illustrating each parameter for use in computing a ventilation flow rate, and a value of each parameter in each example.
FIG. 14 is an explanatory diagram illustrating the above-mentioned each parameter, and a value of each parameter in each example.
FIG. 15 is an explanatory diagram illustrating a relationship between a ventilation flow rate and a ventilation flow velocity in Example 1.
FIG. 16 is an explanatory diagram illustrating a relationship between a ventilation flow rate and a ventilation flow velocity in Example 2.
FIG. 17 is an explanatory diagram illustrating a relationship between a ventilation flow rate and a ventilation flow velocity in Example 3.
FIG. 18 is an explanatory diagram illustrating a relationship between a ventilation flow rate and a ventilation flow velocity in Example 4.

### DESCRIPTION OF EMBODIMENTS

An embodiment of the present invention is described with reference to the drawings. Note that, in the drawings, the same or an equivalent portion is denoted by the same reference sign, and description thereof is not repeated unless otherwise necessary.

### <1. Overview of Fuel Cell System>

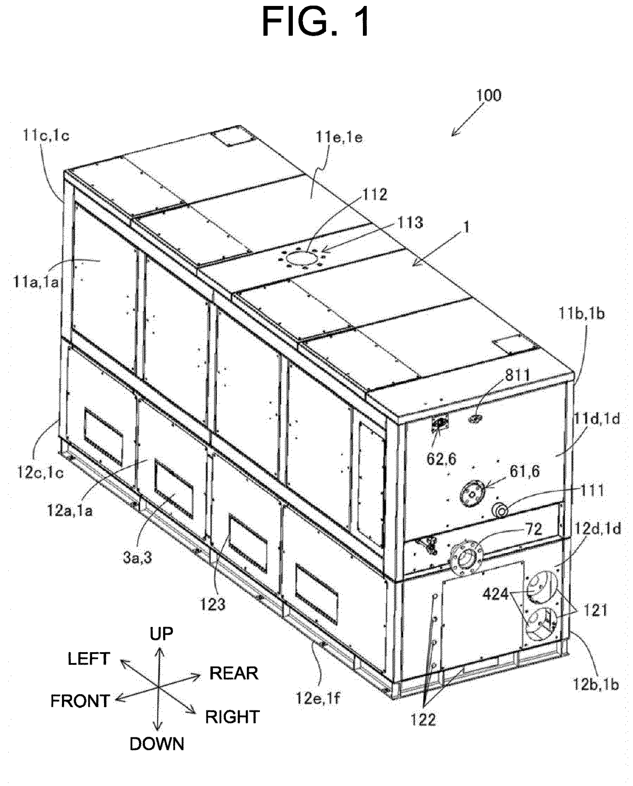

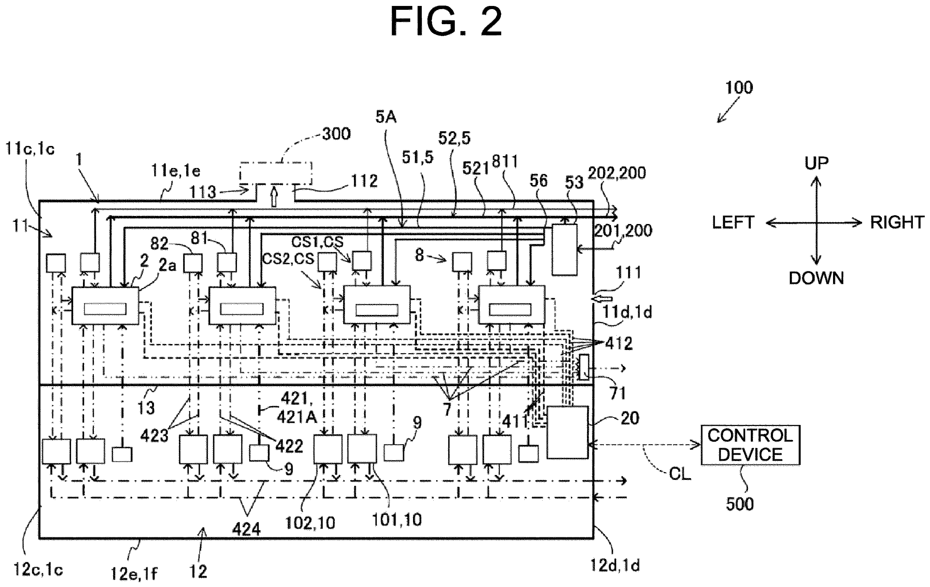

FIG. 1 is a schematic perspective view illustrating an external appearance of a fuel cell system 100 according to an embodiment of the present invention. FIG. 2 is a schematic diagram illustrating an internal configuration of the fuel cell system 100 according to the embodiment of the present invention. Note that, in FIG. 2, arrows of a solid line, a one dot chain line, and a two dot chain line indicate a fluid passage (a pipe in detailed examples), and a direction in which a fluid flows through a fluid passage. Further, in FIG. 2, broken lines indicate wiring. First, an overview of the fuel cell system 100 is described with reference to FIGS. 1 and 2.

Note that, in the present embodiment, an example in which hydrogen is used as a fuel gas for use in the fuel cell system 100 is described. However, a configuration and control of the present embodiment can also be applied to a system that generates electric power by using a fuel gas (for example, a gas containing methane as a main component) other than hydrogen. Further, the fuel cell system 100 is not particularly limited, and is suitable for use in a ship, for example.

As illustrated in FIG. 1, the fuel cell system 100 includes a housing 1. As illustrated in FIG. 2, the housing 1 accommodates a fuel cell module 2. In other words, the fuel cell system 100 includes the fuel cell module 2. Specifically, the number of the fuel modules 2 to be accommodated in the housing 1 is four. However, the number of the fuel cell modules 2 to be accommodated in the housing 1 may be one or plural other than four. In the present embodiment, the fuel cell module 2 is non-explosion-proof electrical equipment against a fuel gas (hydrogen).

The fuel cell module 2 includes a fuel cell stack 2a. Further, the fuel cell module 2 includes a boost converter, a compressor for blowing air, and a pump for circulating a coolant for cooling the fuel cell stack 2a.

The fuel cell stack 2a is constituted of a plurality of laminated cells. Each cell includes a solid polymer electrolyte membrane, an anode electrode, a cathode electrode, and a pair of separators. The anode electrode and the cathode electrode sandwich the solid polymer electrolyte membrane. The anode electrode is a negative electrode (fuel electrode). The anode electrode includes an anode catalyst layer and a gas diffusion layer. The cathode electrode is a positive electrode (air electrode). The cathode electrode includes a cathode catalyst layer and a gas diffusion layer. The anode electrode, the solid polymer electrolyte membrane, and the cathode electrode constitute a membrane electrode assembly (MEA). The pair of separators sandwich the membrane electrode assembly. Each of the separators has a plurality of grooves. Each groove of one of the separators forms a flow path of hydrogen gas. Each groove of the other separator forms a flow path of oxidant gas (for example, air).

On the anode electrode side, hydrogen is catalytically decomposed into hydrogen ions and electrons. The hydrogen ions pass through the solid polymer electrolyte membrane and move to the cathode electrode side. On the other hand, the electrons move to the cathode electrode side through an external circuit. Thus, electric current is generated (electric power is generated). On the cathode electrode side, oxygen contained in the oxidant gas combines with the electrons that have flowed through the external circuit, and the hydrogen ions that have passed through the solid polymer electrolyte membrane, thereby producing water. The produced water is included in exhaust gas, and released to the outside of the fuel cell system 100. The electric power generated by the fuel cell stack 2a is boosted by the boost converter, and taken out to the outside of the fuel cell system 100.

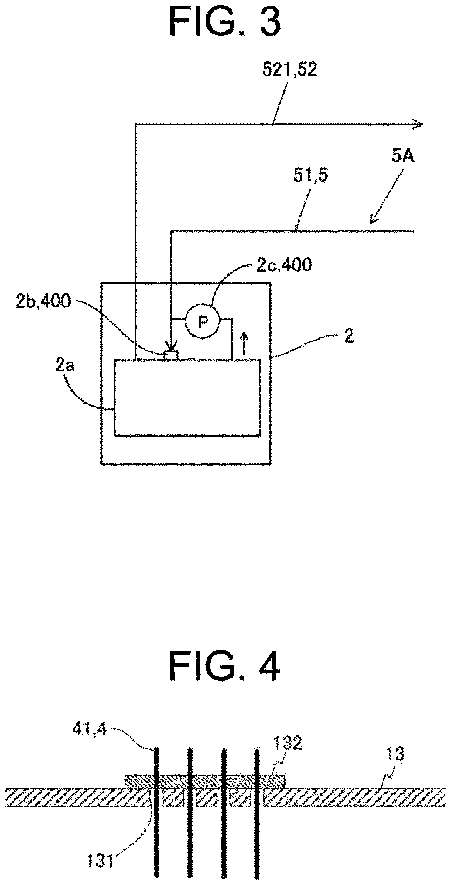

FIG. 3 is an explanatory diagram enlargedly illustrating the fuel cell module 2. A hydrogen supply passage 51 of a hydrogen flow path 5, which will be described later, is connected to the fuel cell stack 2a of the fuel cell module 2 via a hydrogen supply pipe fastening joint 2b. Therefore, hydrogen to be supplied from the hydrogen supply passage 51 is supplied to the fuel cell stack 2a via the hydrogen supply pipe fastening joint 2b. Since the hydrogen supply pipe fastening joint 2b is located at a joint between the fuel cell stack 2a and the hydrogen supply passage 51, the hydrogen supply pipe fastening joint 2b is a portion having a risk of hydrogen leakage, and constitutes a fuel gas leakage risk portion 400. Hydrogen to be discharged from the fuel cell module 2 is sent to a shared vent passage 521 of a vent passage 52 to be described later.

Further, the fuel cell module 2 includes a hydrogen circulation pump 2c. The hydrogen circulation pump 2c is provided to return, to the fuel cell stack 2a, surplus hydrogen that has not been used for power generation in the fuel cell stack 2a. Thus, surplus hydrogen can be reused in the fuel cell stack 2a. The hydrogen circulation pump 2c is also structurally a portion having a risk of hydrogen leakage, and constitutes the fuel gas leakage risk portion 400.

Both of the hydrogen supply pipe fastening joint 2b and the hydrogen circulation pump 2c constitute a part of a fuel gas system 5A, because the hydrogen supply pipe fastening joint 2b and the hydrogen circulation pump 2c supply hydrogen, which is a fuel gas, to the fuel cell stack 2a. In other words, the fuel gas system 5A includes, as the fuel gas leakage risk portion 400, the hydrogen supply pipe fastening joint 2b and the hydrogen circulation pump 2c.

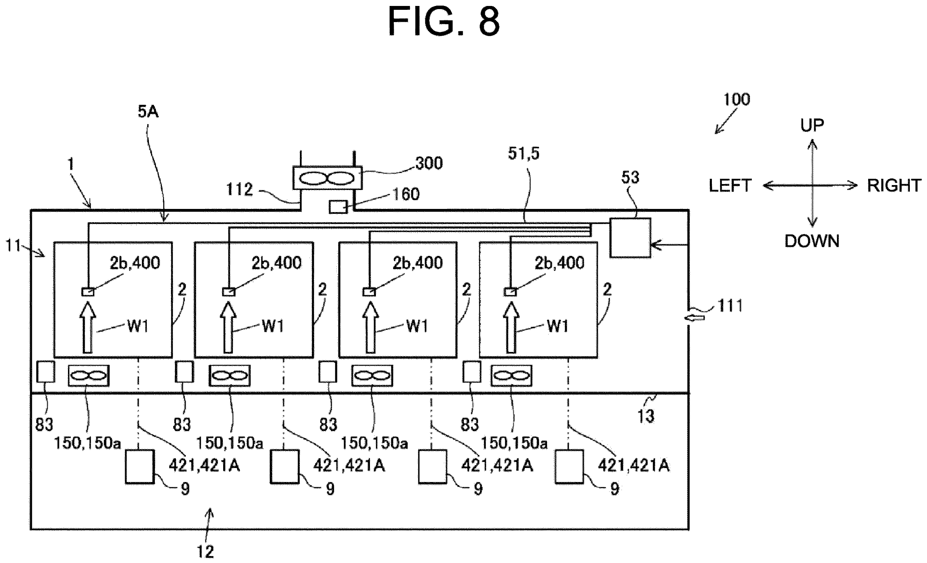

As described in the present embodiment, when the fuel gas leakage risk portion 400 is present within the housing 1 (particularly, within a first section 11 to be described later), an area having a high fuel gas concentration may be locally generated within the first section 11, when a fuel gas leaks within the first section 11. In order to make it difficult for an area as described above to be generated, in the present embodiment, a ventilation flow generator 150 (see FIG. 8) is disposed. Note that, details of the ventilation flow generator 150 are described later.

As illustrated in FIG. 1, the fuel cell system 100 includes a desalination device 3. The desalination device 3 includes a desalination filter 3a. The desalination filter 3a is provided in a window portion 123 of a second section front wall 12a of the housing 1 to be described later. The air from which a saline component is removed by the desalination filter 3a is taken into the housing 1 of the fuel cell system 100. Thus, salt damage within the housing 1 is suppressed. The air taken into the housing 1 is sent to the fuel cell module 2 via an air intake portion 9 (see FIG. 2) to be described later, and is used for electric power generation in the fuel cell stack 2a.

The housing 1 included in the fuel cell system 100 has a rectangular parallelepiped shape, as an example. For convenience of the following description, in describing the fuel cell system 100, directions are defined as follows. Up and down are defined by setting a direction orthogonal to a horizontal floor surface on which the fuel cell system 100 is disposed, as an up-down direction, and setting a side on which the fuel cell system 100 is disposed with respect to the floor surface, as an upper side. Further, front and rear are defined by setting a side on which the desalination device 3 of the housing 1 is disposed, as a front side, and setting a side opposite to the front side of the housing 1, as a rear side. Left and right are defined by setting a direction orthogonal to the up-down direction and the front-rear direction, as a left-right direction, setting a side serving as left when viewed rearward from the front side, as a left side, and setting a side serving as right, as a right side. When the housing 1 is viewed from above in a plan view, the long side direction of the housing 1 is the left-right direction, and the short side direction of the housing 1 is the front-rear direction. These directions are simply names to be used for description, and are not intended to limit an actual positional relationship and direction.

### <2. Detailed Configuration of Fuel Cell System>

### [2-1. Overview of Section]

As illustrated in FIG. 2, the housing 1 includes the first section 11, a second section 12, and a partition wall 13. The second section 12 is located adjacent to the first section 11. Specifically, the first section 11 and the second section 12 are arranged vertically. The first section 11 is disposed above the second section 12. Note that, the configuration in which the first section 11 and the second section 12 are arranged vertically is an example, and another configuration may be adopted. For example, the first section and the second section may be arranged side by side. The fuel cell module 2 is disposed in the first section 11. Auxiliary machines related to an operation of the fuel cell module 2 are disposed in the second section 12. The auxiliary machines are described later.

The partition wall 13 is a partition wall that separates (partitions) the first section 11 and the second section 12. The partition wall 13 constitutes a bottom wall of the first section 11. Further, the partition wall 13 constitutes an upper wall of the second section 12.

Note that, the first section 11 is constituted of, in addition to the partition wall 13, a first section front wall 11a, a first section rear wall 11b, a first section left wall 11c, a first section right wall 11d, and a first section upper wall 11e. The first section front wall 11a constitutes an upper portion of a front surface wall 1a of the housing 1. The first section rear wall 11b constitutes an upper portion of a rear surface wall 1b of the housing 1. The first section left wall 11c constitutes an upper portion of a left surface wall 1c of the housing 1. The first section right wall 11d constitutes an upper portion of a right surface wall 1d of the housing 1. The first section upper wall 11e constitutes an upper surface wall 1e of the housing 1.

Further, the second section 12 is constituted of, in addition to the partition wall 13, the second section front wall 12a, a second section rear wall 12b, a second section left wall 12c, a second section right wall 12d, and a second section bottom wall 12e. The second section front wall 12a constitutes a lower portion of the front surface wall 1a of the housing 1. The second section rear wall 12b constitutes a lower portion of the rear surface wall 1b of the housing 1. The second section left wall 12c constitutes a lower portion of the left surface wall 1c of the housing 1. The second section right wall 12d constitutes a lower portion of the right surface wall 1d of the housing 1. The second section bottom wall 12e constitutes a bottom surface wall 1f of the housing 1.

The partition wall 13 air-tightly partitions the first section 11 and the second section 12. In the present embodiment, as will be described later in detail, the first section 11 is a section in which the fuel gas system 5A is provided, and is a section in which there is a possibility of hydrogen leakage. However, since the partition wall 13 that air-tightly partitions the two sections (the first section 11 and the second section 12) is provided, it is possible to prevent hydrogen from flowing into the second section 12, even when hydrogen leakage occurs in the first section 11. Therefore, it is possible to eliminate the need for equipment disposed in the second section 12 to have an explosion-proof structure against hydrogen. In addition, it is possible to eliminate the need for providing a function of ventilating hydrogen that has leaked into the second section 12.

FIG. 4 is a cross sectional view of the partition wall 13 provided inside the housing 1. As illustrated in FIG. 4, a part of the partition wall 13 has a through-hole 131 passing in the up-down direction. The through-hole 131 is provided to allow a member 4, for example, such as wiring or piping to pass therethrough. The member 4 may include at least one of wiring and piping. In the present embodiment, the member 4 includes wiring and piping. In the example illustrated in FIG. 4, the member 4 is wiring 41. In the partition wall 13, one through-hole 131 is provided for each of a plurality of pieces of wiring 41. However, this is an example, and one through-hole 131 may be configured to collectively pass the plurality of pieces of wiring 41. Note that, the wiring 41 includes a power line and a signal line. The signal line includes a control line and a sensor line.

As illustrated in FIG. 4, the partition wall 13 is provided with a sealing structure 132 that closes the through-hole 131. Airtightness is secured by the sealing structure 132, and even when hydrogen leakage occurs in the first section 11, it is possible to prevent hydrogen from flowing into the second section 12. The sealing structure 132 may be configured by using a sealant such as a silicone-based caulking agent, for example. FIG. 4 illustrates a configuration for securing airtightness by using a sealant. As another example, the sealing structure 132 may be configured by using a cable gland.

Note that, even when the member 4 disposed across the first section 11 and the second section 12 is piping, a sealing structure similar to that of the wiring 41 may be applied. For example, even when the member 4 is an air pipe 421 (see FIG. 2) to be described later, a portion other than the air pipe 421 is sealed by the sealing structure 132. Further, the air pipe 421 is disposed across the first section 11 and the second section 12 through the through-hole 131.

### [2-2. Details of First Section]

As illustrated in FIG. 2, the hydrogen flow path 5 (thick solid line) is disposed in the first section 11. In other words, the fuel cell system 100 includes the hydrogen flow path 5 disposed within the housing 1. Specifically, the hydrogen flow path 5 includes the hydrogen supply passage 51 that supplies hydrogen to the fuel cell module 2. The hydrogen supply passage 51 constitutes the fuel gas system 5A that supplies hydrogen as a fuel gas to the fuel cell stack 2a. Specifically, the fuel cell system 100 includes the hydrogen supply passage 51, as the fuel gas system 5A. Further, the hydrogen flow path 5 includes a vent passage 52 that discharges hydrogen from the fuel cell module 2. The hydrogen flow path 5 can be constituted of piping.

The housing 1 includes a connecting portion 6 (see FIG. 1) that connects the hydrogen flow path 5 to an external hydrogen flow path 200 disposed outside the housing 1, on a wall different from the partition wall 13 among the walls 11a to 11e and 13 constituting the first section 11. The connecting portion 6 may be a connecting portion itself that connects the hydrogen flow path 5 to the external hydrogen flow path 200, or may be a means for achieving connection therebetween. In the present embodiment, the connecting portion 6 is an opening portion through which an end portion of the hydrogen flow path 5 disposed within the first section 11 is exposed to or disposed outside the housing 1. The hydrogen flow path 5 and the external hydrogen flow path 200 can be connected to each other by using the opening portion. The connection is specifically connection between pipes.

In the present embodiment, the connecting portion 6 is provided on the first section right wall 11d. However, the connecting portion 6 may be provided on a wall constituting the first section 11 other than the partition wall 13, such as the first section left wall 11c. Providing the connecting portion 6 on a wall other than the partition wall 13 constituting the first section 11 enables to achieve a configuration in which the hydrogen flow path 5 is not disposed in the second section 12. Specifically, it is possible to eliminate the need for taking measures against hydrogen leakage in the second section 12. Thus, it is possible to easily take measures against hydrogen leakage in the fuel cell system 100.

Similarly to the hydrogen flow path 5 disposed inside the housing 1, the external hydrogen flow path 200 also includes an external hydrogen supply passage 201, which is a passage for supplying hydrogen, and an external vent passage 202, which is a passage for discharging hydrogen. The connecting portion 6 also includes, in association therewith, a hydrogen supply connecting portion 61 for connecting the hydrogen supply passage 51 to the external hydrogen supply passage 201, and a vent connecting portion 62 for connecting the vent passage 52 to the external vent passage 202 (see FIG. 1). In the present embodiment, the hydrogen supply connecting portion 61 and the vent connecting portion 62 are provided on the same wall (first section right wall 11d) constituting the first section 11. However, this is an example, and the hydrogen supply connecting portion 61 and the vent connecting portion 62 may be provided on different walls constituting the first section 11.

In the present embodiment, a plurality of (for example, four) fuel cell modules 2 are disposed in the first section 11. The plurality of fuel cell modules 2 are arranged side by side in the left-right direction. Hydrogen that has entered into the hydrogen supply passage 51 within the housing 1 from the external hydrogen supply passage 201 reaches a branching portion 56 that branches the hydrogen supply passage 51 into four passages via a valve device 53. Note that, details of the valve device 53 are described later. In the branching portion 56, hydrogen is distributed to the four hydrogen supply passages 51 provided exclusively for each of the fuel cell modules 2. Then, the distributed hydrogen is supplied to each of the fuel cell modules 2.

The vent passage 52 includes the shared vent passage 521 to be shared among the plurality of fuel cell modules 2. Hydrogen to be discharged from each of the fuel cell modules 2 is sent to the shared vent passage 521, and discharged from the external vent passage 202. Note that, a separate vent passage may be provided for each of the fuel cell modules 2, and the hydrogen may be separately discharged to the outside of the housing 1.

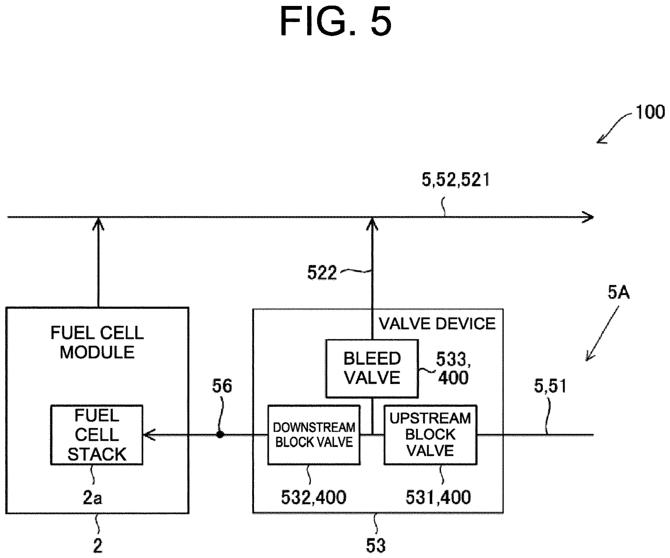

FIG. 5 is a block diagram illustrating details of the valve device 53. The valve device 53 has a valve structure called double block and bleed (DBB). Specifically, the valve device 53 includes upstream block valves 531, downstream block valves 532, and bleed valves 533. The upstream block valves 531 and the downstream block valves 532 are provided in the fuel gas system 5A (particularly, in the hydrogen supply passage 51), and open and close (open or close) the fuel gas system 5A. The upstream block valve 531 and the downstream block valve 532 are disposed in this order from the upstream side in a direction in which hydrogen flows through the hydrogen supply passage 51. Therefore, the downstream block valve 532 is located between the upstream block valve 531 and the fuel cell module 2.

The bleed valve 533 is a valve that opens and closes a vent system 522. The vent system 522 is a piece of piping that branches from the fuel gas system 5A between the upstream block valve 531 and the downstream block valve 532, and is connected to the shared vent passage 521.

When the fuel cell module 2 is activated, the upstream block valve 531 and the downstream block valve 532 are opened, and the bleed valve 533 is closed, whereby hydrogen flowing through the fuel gas system 5A (through the hydrogen supply passage 51) is supplied to the fuel cell module 2. Further, supply of hydrogen to the fuel cell module 2 is stopped by closing the upstream block valve 531 and the downstream block valve 532. At this occasion, opening the bleed valve 533 enables to release, in the fuel gas system 5A, hydrogen staying in a space between the upstream block valve 531 and the downstream block valve 532 to the outside of the housing 1 through the vent system 522 and the shared vent passage 521.

The upstream block valves 531, the downstream block valves 532, and the bleed valves 533 are structurally portions having a risk of hydrogen leakage, and constitute a fuel gas leakage risk portion 400 similarly to the hydrogen circulation pump 2c (see FIG. 3). Specifically, the fuel gas system 5A in which the valve device 53 is disposed includes, as the fuel gas leakage risk portion 400, the upstream block valves 531, the downstream block valves 532, and the bleed valves 533. At this occasion, when all of the upstream block valves 531, the downstream block valves 532, and the bleed valves 533 are referred to as valves, it can be said that the fuel gas system 5A includes the valves as the fuel gas leakage risk portion 400.

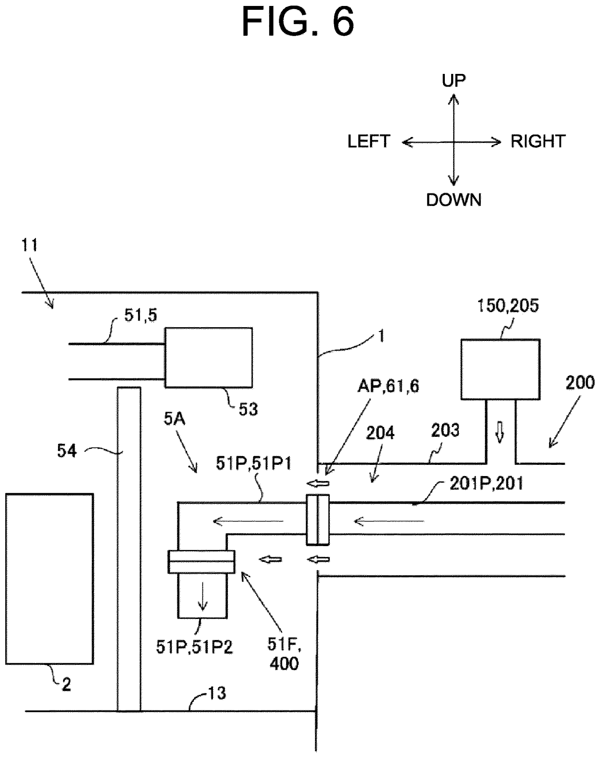

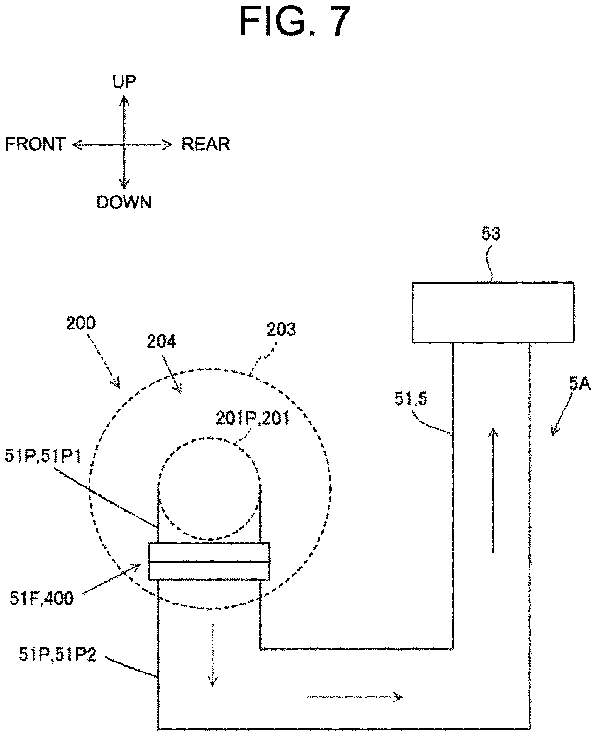

FIGS. 6 and 7 are explanatory diagrams illustrating a schematic configuration of the periphery of the hydrogen supply connecting portion 61 described above. Note that, FIG. 6 illustrates a state of the housing 1 when viewed from the front side. FIG. 7 illustrates a state of the housing 1 when viewed from the right side, in other words, from the connection side of the external hydrogen supply passage 201 (external gas pipe).

The hydrogen supply connecting portion 61 is an opening portion AP, and a pipe 51P constituting the hydrogen supply passage 51 of the fuel gas system 5A, and a pipe 201P constituting the external hydrogen supply passage 201 of the external hydrogen flow path 200 are connected to each other by using the opening portion AP. In a state that the two pipes 51P and 201P are connected to each other, the entirety of the opening portion AP constituting the hydrogen supply connecting portion 61 is not closed, and the inside of the first section 11 communicates with the outside of the housing 1 via the opening portion AP.

An outer pipe 203 is disposed around the pipe 201P constituting the external hydrogen supply passage 201 in such a way as to surround the pipe 201P. In other words, the pipe 201P constituting the external hydrogen supply passage 201 is an inner pipe disposed inside the outer pipe 203. Hereinafter, in describing FIGS. 6 and 7, the pipe 201P constituting the external hydrogen supply passage 201 is referred to as the inner pipe 201P.

The outer pipe 203 is mounted on the housing 1 by using, for example, a screw. The outer pipe 203 surrounds the opening portion AP constituting the hydrogen supply connecting portion 61. The inner diameter of the outer pipe 203 is larger than the diameter of the opening portion AP. An internal space 204 formed between the inner pipe 201P and the outer pipe 203 communicates with the inside of the first section 11 via the opening portion AP. A ventilation fluid (for example, air) is allowed to flow into the internal space 204 from a fluid introduction portion 205. Specifically, the first section 11 is provided in such a way that a ventilation fluid can be supplied via the internal space 204 between the inner pipe 201P and the outer pipe 203.

As described above, in the present embodiment, the fuel cell module 2 and the fuel gas system 5A are accommodated in the common housing 1. Further, the housing 1 is connected to the external hydrogen flow path 200 (external fuel gas pipe) disposed outside the housing 1. The external hydrogen flow path 200 includes the inner pipe 201P and the outer pipe 203. The inner pipe 201P is connected to the fuel gas system 5A (for example, the pipe 51P) within the housing 1. The outer pipe 203 is disposed with a predetermined gap (internal space 204) from an outer peripheral surface of the inner pipe 201P. The gap between the inner pipe 201P and the outer pipe 203 is opened into the housing 1.

Since a ventilation fluid can be supplied into the first section 11 by using the internal space 204, the size of an intake port 111 to be described later can be reduced. Further, in some cases, the intake port 111 may not be provided. In addition, even when hydrogen leaks from the inner pipe 201P, it is possible to feed the leaked hydrogen from the internal space 204 into the first section 11 together with the ventilation fluid, and safely discharge the hydrogen to the outside. Note that, discharge of the ventilation fluid from the first section 11 is described later.

The pipe 51P to be connected to the inner pipe 201P includes a first pipe 51P1 and a second pipe 51P2. The first pipe 51P1 is connected to the inner pipe 201P. The first pipe 51P1 has a shape that extends straight from the connection side (right side) with respect to the inner pipe 201P toward the left side, and then bends downward (see FIG. 6). The second pipe 51P2 connects the first pipe 51P1 and the valve device 53. The second pipe 51P2 extends downward from the connection side with respect to the first pipe 51P1, then bends rearward of the housing 1, then bends upward, and is connected to the valve device 53 (see FIG. 7).

The first pipe 51P1 and the second pipe 51P2 are connected to each other by fastening flanges thereof by bolts. Herein, a coupling portion between the first pipe 51P1 and the second pipe 51P2 is referred to as a pipe flange 51F. The pipe flange 51F is a portion having a risk of hydrogen leakage, and constitutes the fuel gas leakage risk portion 400. Specifically, the fuel gas system 5A includes the pipe flange 51F as the fuel gas leakage risk portion 400.

As illustrated in FIG. 6, within the housing 1, the fuel cell module 2 is located on the left side with respect to the pipe flange 51F as the fuel gas leakage risk portion 400. In other words, the fuel cell module 2 is located on a side opposite to the connection side between the housing 1 and the external hydrogen flow path 200 with respect to the pipe flange 51F.

As illustrated in FIGS. 1 and 2, the first section 11 is provided with the intake port 111 and a ventilation port 112 for ventilation. The intake port 111 may be provided in at least one of the walls 11a to 11e, and 13 constituting the first section 11, except for the partition wall 13. In the present embodiment, the intake port 111 is provided in the first section right wall 11d. The intake port 111 provided in the first section right wall 11d is a through-hole passing through the wall in the left-right direction. A ventilation fluid is supplied from the intake port 111 into the first section 11. A pipe for supplying the ventilation fluid is mounted on the intake port 111. The ventilation fluid is, for example, air, but may be an inert gas such as nitrogen gas or argon gas.

The first section 11 includes a ventilation device that ventilates inside the section, or a ventilation device connecting portion to be connected to a ventilation device. In the present embodiment, as illustrated in FIGS. 1 and 2, the first section 11 includes a ventilation device connecting portion 113 to be connected to a ventilation device 300. The ventilation device connecting portion 113 is configured to include the ventilation port 112. The ventilation device 300 is disposed on the downstream side of a flow of the ventilation fluid with respect to the ventilation port 112. The ventilation device 300 may be provided on the housing 1 side, or may be provided on the ship side on which the housing 1 is installed. In any case, the fluid within the first section 11 is discharged to the outside of the first section 11 via the ventilation port 112 by driving of the ventilation device 300. Therefore, even when hydrogen leaks within the first section 11, it is possible to discharge the hydrogen to the outside of the housing 1 together with the ventilation fluid in such a way that the hydrogen does not leak into the second section 12.

Specifically, the ventilation port 112 is provided in the first section upper wall 11e (the upper surface wall 1e of the housing 1). Specifically, the ventilation device connecting portion 113 is provided on the first section upper wall 11e, which is an upper wall of the first section 11. Even when hydrogen leaks, the hydrogen can be easily discharged, because the hydrogen can be guided above the fuel cell module 2.

Note that, the ventilation device 300 may be provided inside the first section 11. In this case, the ventilation device 300 may be disposed on the upstream side of a flow of a ventilation fluid with respect to the ventilation port 112. Also in this case, the ventilation device 300 is preferably provided on the first section upper wall 11e, which is an upper wall of the first section 11.

In addition, an exhaust path 7 and a reserve tank 8 are disposed in the first section 11 (see FIG. 2). Note that, in FIG. 2, the exhaust path 7 is indicated by a thin two dot chain line.

The exhaust path 7 is connected to the fuel cell module 2. Specifically, the exhaust path 7 is an exhaust pipe. Exhaust gas from the fuel cell module 2 flows through the exhaust path 7. Exhaust gas from the fuel cell module 2 contains water vapor generated during power generation, oxygen and nitrogen which have been supplied to the fuel cell module 2 but have not been used for power generation, and hydrogen to be purged and discharged from an anode path of the fuel cell stack 2a in a timely manner.

In the present embodiment, different exhaust paths 7 are connected to each of the four fuel cell modules 2 disposed in the first section 11. Specifically, four exhaust paths 7 are disposed in the first section 11. The four exhaust paths 7 are connected to an exhaust path assembly portion 71 disposed within the first section 11. The exhaust path assembly portion 71 is disposed at a right end portion of the first section 11. Exhaust gas in the four exhaust paths 7 is collected in the exhaust path assembly portion 71, and is released to the outside of the first section 11 through one terminal exhaust path 72 (see FIG. 1).

Note that, as illustrated in FIG. 1, a distal end (right end) of the terminal exhaust path 72 protrudes to the outside from the first section right wall 11d. An external exhaust path (not illustrated) is connected to a distal end of the terminal exhaust path 72, and releases exhaust gas in the fuel cell module 2 to an appropriate place.

The reserve tank 8 is included in a cooling system CS provided for the fuel cell module 2 (see FIG. 2). Specifically, the cooling system CS provided for the fuel cell module 2 includes a first cooling system CS1 and a second cooling system CS2. For this reason, specifically, the reserve tank 8 includes a first reserve tank 81 included in the first cooling system CS1, and a second reserve tank 82 included in the second cooling system CS2.

The first cooling system CS1 is a cooling system that cools the fuel cell stack 2a included in the fuel cell module 2. Specifically, the reserve tank 81 included in the first cooling system CS1 that cools the fuel cell stack 2a included in the fuel cell module 2 is disposed in the first section 11. The first cooling system CS1 circulates a first coolant that cools the fuel cell stack 2a by driving of a pump (not illustrated) included in the fuel cell module 2. The first reserve tank 81 stores or discharges the first coolant as necessary.

The first reserve tank 81 is disposed above the fuel cell stack. For this reason, even when hydrogen is contained in the first coolant due to a failure, the hydrogen can be released to a position higher than the fuel cell stack 2a. Note that, the first cooling system CS1 is provided for each of the fuel cell modules 2. For this reason, in the present embodiment, four first reserve tanks 81 are disposed in the first section 11.

As illustrated in FIG. 2, each of the first reserve tanks 81 is connected to an air vent pipe 811 (thin solid line). Further, as illustrated in FIG. 1, an end portion of the air vent pipe 811 is exposed to the outside via an opening portion (not illustrated) in the first section right wall 11d. Even when hydrogen is contained in the first coolant due to a failure, the hydrogen can be discharged to the outside of the first section 11 via the air vent pipe 811.

The second cooling system CS2 is a cooling system that cools electrical equipment (particularly, power electronics equipment) included in the fuel cell module 2. The reserve tank 82 included in the second cooling system CS2 that cools the electrical equipment included in the fuel cell module 2 is disposed in the first section 11. The second cooling system CS2 circulates a second coolant that cools the electrical equipment by driving of a coolant pump 83 (see FIG. 8) disposed outside the fuel cell module 2. The second reserve tank 82 stores or discharges the second coolant as necessary.

Note that, the second cooling system CS2 is provided for each of the fuel cell modules 2. For this reason, in the present embodiment, four second reserve tanks 82 are disposed in the first section 11.

In the present embodiment, the coolant pump 83 is non-explosion-proof electrical equipment against a fuel gas (hydrogen). Specifically, the fuel cell system 100 includes the coolant pump 83 as non-explosion-proof electrical equipment. In the present embodiment, in order to increase a degree of ventilation within the first section 11 in which the non-explosion-proof electrical equipment is installed, a ventilation means other than the ventilation device 300 is disposed in the first section 11. Note that, details of the ventilation means are described later.

### [2-3. Details of Second Section]

As described above, auxiliary machines related to an activation of the fuel cell module 2 are disposed in the second section 12. The auxiliary machines include the air intake portion 9, a heat exchanger 10, and a switchboard 20 illustrated in FIG. 2.

The air intake portion 9 takes in air to be supplied to an air electrode included in the fuel cell stack 2a. In the present embodiment, the air intake portion 9 is disposed in the second section 12. Specifically, the air intake portion 9 is disposed in a section in which hydrogen leakage does not occur. This arrangement makes it possible to prevent a situation in which hydrogen-containing air is taken in from the air intake portion 9. Therefore, it is possible to prevent hydrogen-containing air from being supplied to the air electrode of the fuel cell stack.

Specifically, air intake portions 9 of the same number as the plurality of fuel cell modules 2 disposed in the first section 11 are disposed in the second section 12. Since the air intake portion 9 is provided for each of the fuel cell modules 2, when a failure occurs in any of the plurality of fuel cell modules 2, it is not necessary to stop all the fuel cell modules 2, and the fuel cell module 2 in which a failure does not occur can be continuously activated.

Specifically, the air intake portion 9 includes a filter. An air pipe 421 (indicated by a thick two dot chain line in FIG. 2) through which air flows is connected to the air intake portion 9. The air intake portion 9 and the air pipe 421 constitute a cathode air system 421A. The air pipe 421 is included in the member 4 illustrated in FIG. 4. The air pipe 421 is disposed across the first section 11 and the second section 12. Air taken in from the air intake portion 9 by an activation of a compressor included in the fuel cell module 2 is supplied to the air electrode of the fuel cell stack 2a included in the fuel cell module 2. As described above, it can be said that the fuel cell system 100 according to the present embodiment includes the second section 12 in which the air intake portion 9 of the cathode air system 421A connected to the fuel cell module 2 is stored.

The heat exchanger 10 constitutes the cooling system CS provided for the fuel cell module 2. As described above, in the present embodiment, the cooling system CS includes the first cooling system CS and the second cooling system CS. For this reason, specifically, the heat exchanger 10 includes a first heat exchanger 101 constituting the first cooling system CS1, and a second heat exchanger 102 constituting the second cooling system CS2. The first heat exchanger 101 and the second heat exchanger 102 are provided for each of the fuel cell modules 2. Specifically, four first heat exchangers 101 and four second heat exchangers 102 are disposed in the second section 12.

The first heat exchanger 101 exchanges heat between the first coolant, and a third coolant to be supplied from the outside of the housing 1.

The first coolant is sent from the fuel cell stack 2a to the first heat exchanger 101, and returned from the first heat exchanger 101 to the fuel cell stack 2a by using a first coolant pipe 422 that connects the first heat exchanger 101 to a pump included in the fuel cell module 2. Note that, the first coolant pipe 422 is included in the member 4 illustrated in FIG. 4. The first coolant pipe 422 is disposed across the first section 11 and the second section 12. The first coolant pipe 422 is indicated by a thin one dot chain line in FIG. 2.

The third coolant is supplied from the outside of the housing 1 to the first heat exchanger 101, and discharged from the first heat exchanger 101 to the outside of the housing 1 by using a third coolant pipe 424 disposed within the second section 12. As illustrated in FIG. 1, a connection port 121 for connecting the third coolant pipe 424 for supplying and discharging the third coolant to an external pipe is provided in the second section right wall 12d. Note that, a device disposed outside the housing 1 is used to supply the third coolant to the third coolant pipe 424. The third coolant may be, but is not limited to, seawater. The third coolant pipe 424 is indicated by a thick one dot chain line in FIG. 2.

The second heat exchanger 102 exchanges heat between the second coolant, and the third coolant to be supplied from the outside of the housing 1. Equipment that supplies and discharges the third coolant is shared with the first heat exchanger 101.

The second coolant is sent from electrical equipment included in the fuel cell module 2 to the second heat exchanger 102, and returned from the second heat exchanger 102 to the electrical equipment by using a second coolant pipe 423 that connects the second heat exchanger 102 to a pump included in the fuel cell module 2. Note that, the second coolant pipe 423 is included in the member 4 illustrated in FIG. 4, and disposed across the first section 11 and the second section 12. The second coolant pipe 423 is indicated by a thin one dot chain line in FIG. 2.

The third coolant is supplied from the outside of the housing 1 to the second heat exchanger 102, and discharged from the second heat exchanger 102 to the outside of the housing 1 by using the third coolant pipe 424 disposed within the second section 12.

The switchboard 20 is disposed at a right end portion of the second section 12. The second section right wall 12d is provided with an electrical wire arrangement portion 122 in which electrical wires to be connected to the switchboard 20 are arranged. Specifically, the electrical wire arrangement portion 122 is a portion through which an electrical wire is taken out from the inside of the housing 1 to the outside, and an electrical wire is inserted from the outside to the inside. Further, the electrical wire arrangement portion 122 may be a portion that connects an electrical wire inside the housing 1 to an electrical wire outside the housing 1. The electrical wire arrangement portion 122 may be constituted of an opening portion through which an electrical wire passes, a connector to which an electrical wire is connected, and the like.

The switchboard 20 includes various terminals and relays. The various terminals include, for example, terminals to be connected to power lines 411 (thick broken lines in FIG. 2) through which electric power generated in the fuel cell module 2 flows. Note that, the power line 411 is included in the wiring 41 (see FIG. 3) disposed across the first section 11 and the second section 12. Further, the various terminals include terminals to be connected to control lines 412 (thin broken lines in FIG. 2) for controlling the fuel cell module 2. Note that, the control line 412 may be included in the wiring 41 (refer to FIG. 3) disposed across the first section 11 and the second section 12. In addition, the various terminals include terminals to be connected to sensor lines that are connected to sensors such as a pressure sensor and a temperature sensor. Further, the various terminals include a terminal and the like to be connected to a communication line CL that communicates with a control device 500.

The control device 500 is a device that controls an operation of each unit within the housing 1. Specifically, the fuel cell system 100 according to the present embodiment includes the control device 500. The control device 500 is constituted of, for example, a programmable logic controller (PLC). In the present embodiment, the control device 500 is disposed outside the housing 1, and communicably connected to the switchboard 20 of the housing 1 via the communication line CL. Thus, each unit within the housing 1 can be controlled via the switchboard 20. Note that, the control device 500 may be disposed within the housing 1 (for example, within the switchboard 20), and may be configured to control each unit of the housing 1 by being remotely controlled from the outside.

### <3. Ventilation Flow Generator>

A fuel cell installation section is, in principle, set to the class 1 danger zone (Zone 1) according to the above-mentioned IMO rules. However, the danger zone classification by IEC60079-10-1 may be applied based on determination of competent authorities. Electrical equipment to be installed in the class 1 danger zone and the class 2 danger zone (Zone 2 or Zone 2NE) are required to have explosion-proof specifications according to the classification of the danger zone, and the higher the grade of the danger zone, the higher the safety of the explosion-proof specifications is required to be. However, electrical equipment having higher safety explosion-proof specifications is larger in size and costs high. In view of the above, it is considered that the fuel cell installation section is classified as a low-grade danger zone (for example, Zone 2NE). A high degree of ventilation is required to classify the fuel cell installation section as a low-grade danger zone. Specifically, it is required that an area having a high fuel gas concentration is less likely to be locally generated. In view of the above, the present embodiment aims at achieving a high degree of ventilation by providing a ventilation flow generator. In the following, details of the ventilation flow generator are described.

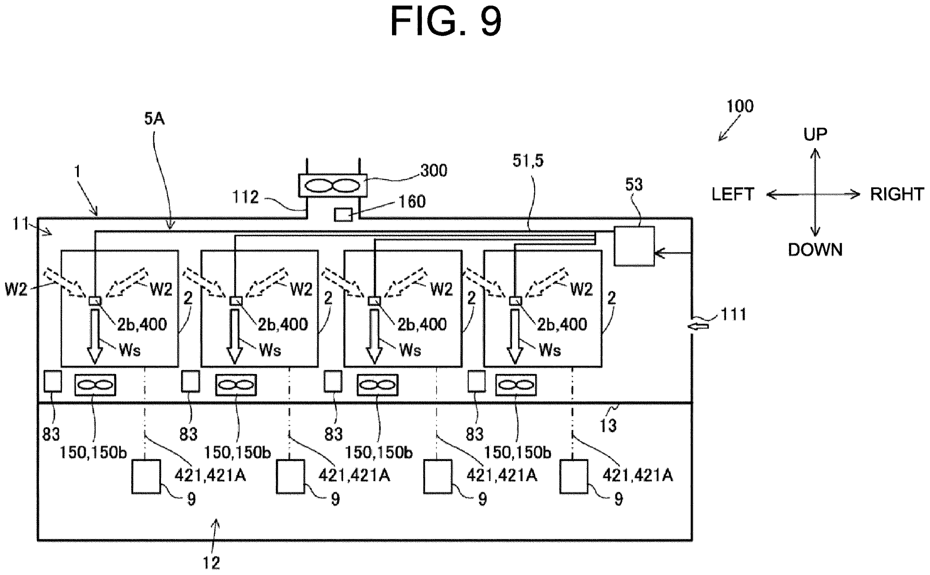

FIG. 8 is an explanatory diagram schematically illustrating a configuration of main parts of the fuel cell system 100 according to the present embodiment. FIG. 9 is an explanatory diagram illustrating another configuration of the main parts. As illustrated in FIGS. 8 and 9, the fuel cell system 100 includes a ventilation flow generator 150. The ventilation flow generator 150 is installed within the housing 1 (within the first section 11), and generates a ventilation flow directed toward the fuel gas leakage risk portion 400. In FIGS. 8 and 9, the hydrogen supply pipe fastening joint 2b is assumed as the fuel gas leakage risk portion 400.

Herein, "a ventilation flow directed toward the fuel gas leakage risk portion 400" may be, for example, as illustrated in FIG. 8, a ventilation flow W1 that is discharged from the ventilation flow generator 150 in a direction of the fuel gas leakage risk portion 400, and directed directly toward the fuel gas leakage risk portion 400. Further, as illustrated in FIG. 9, the ventilation flow may be a ventilation flow W2 that flows from the surroundings toward the fuel gas leakage risk portion 400, as a result of sucking surrounding air by the ventilation flow generator 150 to thereby allow wind Ws to flow from the fuel gas leakage risk portion 400 toward the ventilation flow generator 150. The former ventilation flow W1 is achieved by constituting the ventilation flow generator 150 of a blower fan 150a. The latter ventilation flow W2 is achieved by constituting the ventilation flow generator 150 of a suction fan 150b. FIG. 8 illustrates a case where the ventilation flow generator 150 is constituted of the blower fan 150a, and the direction of the ventilation flow W1 that flows at that occasion is indicated by a solid line arrow. Further, FIG. 9 illustrates a case where the ventilation flow generator 150 is constituted of the suction fan 150b, and the direction of the ventilation flow W2 that flows at that occasion is indicated by a broken line arrow.

The ventilation flow generator 150 as described above is constituted of, for example, a DC fan. The DC The fan is driven by electric power to be supplied from a DC power supply. Note that, the ventilation flow generator 150 is not limited to the above-mentioned DC fan, as long as the ventilation flow generator 150 can generate "a ventilation flow directed toward the fuel gas leakage risk portion 400", and other fans or devices may be used.

In the present embodiment, as illustrated in FIGS. 8 and 9, the ventilation flow generator 150 is disposed below the fuel gas leakage risk portion 400, and beside the above-mentioned coolant pump 83, but the location thereof is not particularly limited.

Providing the ventilation flow generator 150 as described above enables to quickly diffuse leaked fuel gas by the ventilation flow W1 or W2 generated by the ventilation flow generator 150, even when the fuel gas (hydrogen) to be supplied to the fuel cell stack 2a by the fuel gas system 5A leaks from the fuel gas leakage risk portion 400. Thus, an area where the fuel gas concentration is locally high is less likely to be generated within the first section 11, and a high degree of ventilation can be achieved. Therefore, although depending on the rules of each country, it becomes possible to install the non-explosion-proof fuel cell module 2 as described in the present embodiment, in a zone (a safest zone according to the rules) where a high degree of ventilation is required among the danger zones in the installation section of the fuel cell module 2. In other words, a non-explosion-proof fuel cell module 2 can be employed as the fuel cell module 2 to be mounted on a ship.

Note that, the degree of ventilation is defined by a ventilation flow rate and a ventilation flow velocity. The ventilation flow rate is a flow rate of a ventilation flow required to dilute a flow rate (leakage flow rate) of a fuel gas that has leaked from the fuel gas leakage risk portion 400 to a combustion (explosion) lower limit concentration or less. The ventilation flow velocity is a flow velocity of a ventilation flow flowing around the fuel gas leakage risk portion 400. In the present embodiment, in order to classify the inside of the first section 11, which is the installation section of the fuel cell module 2, as the class 2 danger zone (for example, Zone 2NE), which is a safe place at a normal time, the ventilation flow rate at which a high degree of ventilation is achievable by the ventilation flow generator 150 was specifically verified by simulation for each type of the fuel gas leakage risk portion 400. The results (examples) are described later.

When it is important to achieve the fuel cell system 100 at a low cost by using a non-explosion-proof fan against a fuel gas, it is desirable to reduce contact of the fuel gas that has leaked from the fuel gas leakage risk portion 400 with the ventilation flow generator 150. From a viewpoint as described above, it is desirable that the ventilation flow generator 150 is configured to blow the ventilation flow W1 toward the fuel gas leakage risk portion 400. In other words, when it is important to use a non-explosion-proof fan, the ventilation flow generator 150 is desirably the blower fan 150a that blows out the ventilation flow W1.

On the other hand, when it is important to increase a degree of freedom in layout of peripheral components, it is desirable that a fuel gas that has leaked from the fuel gas leakage risk portion 400 can be collected without being diffused to the surroundings. Therefore, from a viewpoint of emphasizing the degree of freedom in layout, it is desirable that the ventilation flow generator 150 is the suction fan 150b that generates the ventilation flow W2 by sucking air. Note that, in this case, it is desirable that the suction fan 150b has explosion-proof specifications.

In the present embodiment, the fuel gas leakage risk portion 400 includes at least one of the hydrogen supply pipe fastening joint 2b (fuel gas pipe joint), the pipe flange 51F, valves (the upstream block valves 531, the downstream block valves 532, and the bleed valves 533), and the hydrogen circulation pump 2c (fuel pump). These are a portion having a risk of fuel gas leakage. The configuration of the present embodiment capable of achieving a high degree of ventilation by providing the ventilation flow generator 150, is very advantageous in the fuel cell system 100 including the hydrogen supply pipe fastening joint 2b and the like, as the fuel gas leakage risk portion 400.

Note that, the fuel gas leakage risk portion 400 may include a portion having a risk of fuel gas leakage, in addition to the above, such as a valve seal portion, a compressor, a pump seal portion, and a relief valve.

In the present embodiment, as illustrated in FIG. 8, the ventilation flow W1 to be generated by the ventilation flow generator 150 (blower fan 150a) flows from the ventilation flow generator 150 toward the fuel gas leakage risk portion 400. In other words, the ventilation flow W1 flows from the ventilation flow generator 150 in a direction different from a direction toward the coolant pump 83 disposed beside the ventilation flow generator 150. Further, as illustrated in FIG. 9, the ventilation flow W2 to be generated by the ventilation flow generator 150 (suction fan 150b) flows from the periphery of the fuel gas leakage risk portion 400 toward the fuel gas leakage risk portion 400. In other words, the ventilation flow W2 flows from the periphery of the fuel gas leakage risk portion 400 in a direction different from the direction toward the coolant pump 83.

In order to reduce a risk of ignition at the coolant pump 83, which is non-explosion-proof electrical equipment, when a fuel gas leaks from the fuel gas leakage risk portion 400, it is desirable to reduce the flow of the fuel gas that has leaked from the fuel gas leakage risk portion 400 toward the coolant pump 83 along with a ventilation flow. For this reason, it is desirable to dispose the ventilation flow generator 150 in such a way that the ventilation flow W1 or W2 to be generated by the ventilation flow generator 150 flows in a direction different from the direction toward the coolant pump 83. In other words, it is desirable that the ventilation flow generator 150 is disposed in a direction in which the ventilation flow W1 or W2 is directed in a direction different from that of the coolant pump 83.

In the present embodiment, the ventilation flow generator 150 is disposed in such a way that a blowing direction (a direction in which the ventilation flow W1 flows) or a sucking direction (a direction in which the wind Ws flows) is aligned with the up-down direction. In other words, the ventilation flow generator 150 is disposed in such a way that a blowing direction or a sucking direction is aligned with a direction different from a lateral direction in which the ventilation flow generator 150 and the coolant pump 83 are arranged. By arranging the ventilation flow generator 150 in a direction as described above, a configuration in which the ventilation flow W1 or W2 is directed in a direction different from that of the coolant pump 83 is achieved.

In the present embodiment, hydrogen (hydrogen gas) is used as the fuel gas to be supplied to the fuel cell module 2. Since hydrogen is lighter than air, when the hydrogen leaks from the fuel gas leakage risk portion 400, the hydrogen rises. Therefore, for example, when hydrogen gas leaks from the fuel gas leakage risk portion 400 while the ventilation flow generator 150 is stopped, non-explosion-proof electrical equipment (for example, the coolant pump 83) is desirably disposed below at least one fuel gas leakage risk portion 400, as illustrated in FIGS. 8 and 9, from a viewpoint of reducing contact of hydrogen gas with the non-explosion-proof electrical equipment.

As illustrated in FIG. 8 and the like, the first section 11 of the housing 1 stores the fuel cell module 2, the fuel gas system 5A, and the ventilation flow generator 150. In the present embodiment, as described above, the air pipe 421 constituting the cathode air system 421A is disposed across the first section 11 and the second section 12 through the through-hole 131 (see FIG. 4) of the partition wall 13, and a portion other than the air pipe 421 is sealed by the sealing structure 132 (see FIG. 4). Therefore, a flow of air between the first section 11 and the second section 12 is blocked in a portion other than the cathode air system 421A.

Accordingly, even when a fuel gas leaks from the fuel gas leakage risk portion 400 of the fuel gas system 5A stored in the first section 11, it is avoided that the leaked fuel gas enters from the first section 11 into the second section 12. Consequently, it is also avoided that the leaked fuel gas is taken in from the air intake portion 9 within the second section 12, and supplied to the cathode (air electrode) of the fuel cell module 2 via the air pipe 421.

As described above, from a viewpoint of avoiding that a leaked fuel gas is supplied to the cathode of the fuel cell module 2, when the fuel gas leaks from the fuel gas leakage risk portion 400, it is desirable that the fuel cell system 100 includes the partition wall 13 serving as a barrier wall that blocks a flow of air between the first section 11 and the second section 12 in a portion other than the cathode air system 421A.

### <4. Other Configuration of Ventilation Flow Generator>

As illustrated in FIGS. 6 and 7, when the pipe flange 51F constitutes the fuel gas leakage risk portion 400, the pipe flange 51F is desirably located to overlap the gap (internal space 204) between the inner pipe 201P and the outer pipe 203, when viewed from the connection side of the external hydrogen supply passage 201 (external gas pipe) with respect to the housing 1 (see FIG. 7 particularly). In the present embodiment, when viewed from the connection side, the entirety of the pipe flange 51F is located to overlap the internal space 204. Note that, a part of the pipe flange 51F may be located to overlap the internal space 204, when viewed from the connection side.

In this case, the fluid introduction portion 205 may constitute the ventilation flow generator 150. In other words, the ventilation flow generator 150 may include the fluid introduction portion 205 that introduces a ventilation fluid into the internal space 204 of the external hydrogen supply passage 201. When a ventilation fluid is introduced into the internal space 204 from the fluid introduction portion 205, the ventilation fluid flows through the internal space 204, and is taken into the housing 1. When viewed from the connection side, the pipe flange 51F is located to overlap the internal space 204. Therefore, even when a fuel gas leaks from the pipe flange 51F, a ventilation fluid (ventilation flow) flowing through the internal space 204 directly and efficiently comes into contact with the pipe flange 51F, and the leaked fuel gas can be quickly diffused.

Therefore, for example, it is not necessary to provide a fan for blowing air toward the pipe flange 51F separately from the fluid introduction portion 205. Further, in this case, there is also an advantage that the existing fluid introduction portion 205 to be connected to a double pipe (external hydrogen flow path 200) including the inner pipe 201P and the outer pipe 203 can be advantageously used as the ventilation flow generator 150.

Further, from a viewpoint of reducing a flow of a fuel gas that has leaked from the pipe flange 51F as the fuel gas leakage risk portion 400 toward the fuel cell module 2 after being diffused by a ventilation flow flowing through the internal space 204, as illustrated in FIG. 6, it is advantageous to dispose a shielding plate 54 between the fuel cell module 2 and the pipe flange 51F. In this case, the shielding plate 54 serves as a baffle plate that prevents a fuel gas diffused by a ventilation flow from moving toward the fuel cell module 2. Thereafter, the fuel gas flows toward the ventilation port 112 (see FIG. 2 and the like) while avoiding the fuel cell module 2, and is discharged to the outside of the housing 1 by the ventilation device 300.

### <5. Control at Time of Abnormality>

As illustrated in FIGS. 8 and 9, the fuel cell system 100 according to the present embodiment includes the intake port 111 and the ventilation port 112 provided in the first section 11, and the ventilation device 300 that ventilates the first section 11. In addition, the fuel cell system 100 includes a gas detector 160. The gas detector 160 is a sensor that detects a fuel gas concentration within the housing 1.

In the present embodiment, since the fuel gas is hydrogen gas, the gas detector 160 is constituted of a hydrogen sensor that detects a hydrogen concentration. The gas detector 160 is provided, for example, in the vicinity of the ventilation port 112. Note that, the gas detector 160 may be provided in the vicinity of the fuel gas leakage risk portion 400. In addition, the number of the gas detectors 160 may be one or more.

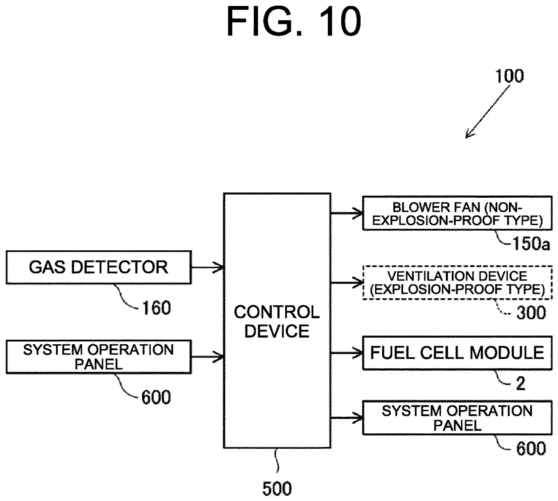

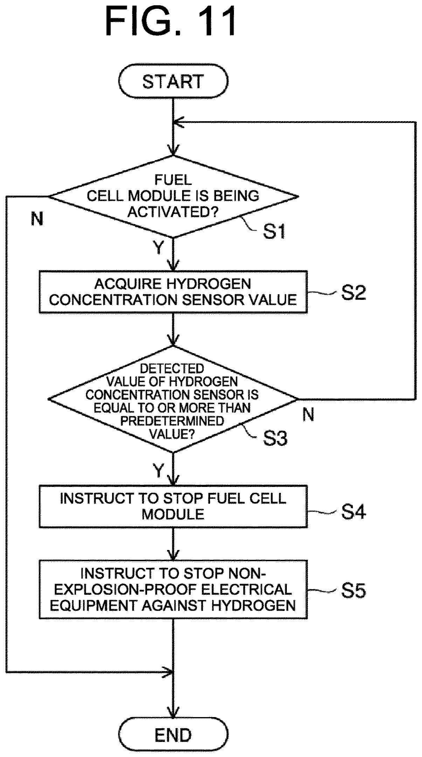

In the present embodiment, in order to secure safety against fuel gas leakage, the following control is performed by the control device 500 illustrated in FIG. 2. FIG. 10 is a block diagram illustrating a configuration related to control at a time of abnormality in the fuel cell system 100. FIG. 11 is a flowchart illustrating a flow of an operation by control at a time of abnormality.

Note that, herein, it is assumed that the non-explosion-proof blower fan 150a against hydrogen is used as the ventilation flow generator 150. Further, the ventilation device 300 is assumed to be an explosion-proof fan against hydrogen. The fuel cell system 100 is provided with a system operation panel 600 for inputting various instructions to the fuel cell system 100. The system operation panel 600 is constituted, for example, of a display apparatus with a touch panel. The system operation panel 600 may be integrated with the control device 500 outside the housing 1, or may be provided separately from the control device 500 and capable of communicating with the control device 500. Further, the system operation panel 600 may be provided on the housing 1.

When the fuel cell module 2 is being activated (Yes in S1), the gas detector 160 detects a hydrogen gas concentration within the housing 1 (S2). Note that, in S1, when the fuel cell module 2 is being activated, the blower fan 150a and the ventilation device 300 are also being activated. When the detected value of hydrogen concentration acquired in S2 is less than a predetermined value (No in S3), the processing returns to S1, and operations thereafter are repeated.

On the other hand, when the detected value of hydrogen concentration is equal to or more than the predetermined value (Yes in S3), the control device 500 outputs, to the housing 1, a control signal for instructing to stop the fuel cell module 2 (S4). Thus, the activation of the fuel cell module 2 is stopped. In addition, the control device 500 outputs, to the housing 1, a control signal for instructing to stop the non-explosion-proof blower fan 150a against hydrogen (S5). Thus, the blower fan 150a is stopped. Note that, a monitor of the system operation panel 600 displays information indicating that the fuel cell module 2 and the blower fan 150a have stopped. Since the ventilation device 300 is an explosion-proof type, ventilation is continued.

Note that the ventilation device 300 may be provided on the ship side, for example. In this case, the ventilation device 300 is not communicably connected to the control device 500, but may be connected thereto. Further, when an instruction to stop the fuel cell module 2 is manually input on the system operation panel 600, operations after S4 are performed.

As described above, when a fuel gas concentration within the first section 11 becomes equal to or more than a predetermined value due to fuel gas leakage, it is desirable to stop the activation of the blower fan 150a, which is non-explosion-proof electrical equipment, in order to secure safety (see S3 and S5). Further, in order to reduce the fuel gas concentration within the first section 11 to a value less than the predetermined value, and minimize the influence of fuel gas leakage, it is desirable that the explosion-proof ventilation device 300 continues ventilation within the first section 11, even after the activation of the blower fan 150a is stopped.

Note that, when the activation of the fuel cell module 2 is stopped in S4, shutoff valves (the upstream block valves 531 and the downstream block valves 532) of the valve device 53 may be closed.

### <6. Ventilation Flow Velocity Achievable by Ventilation Flow Generator>

Next, a result of verification on a ventilation flow velocity at which a high degree of ventilation is achievable by the ventilation flow generator 150 is described as examples. In the following, as the fuel gas leakage risk portion 400, the pipe flange 51F (Example 1), the hydrogen supply pipe fastening joint 2b (Example 2), the upstream block valves 531 (Example 3), and the hydrogen circulation pump 2c (Example 4) were verified as examples. Then, a ventilation flow velocity at which a high degree of ventilation is achievable was computed for each of Examples 1 to 4, based on the international standard (IEC60079-10-1).

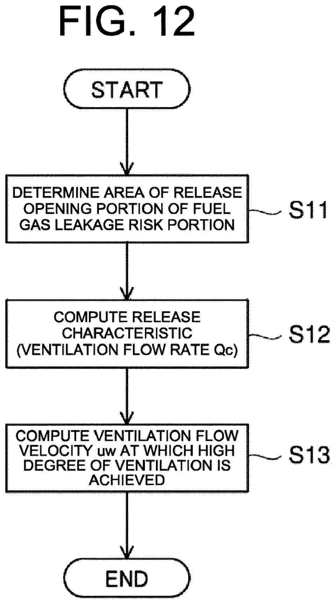

FIG. 12 is a flowchart illustrating a flow of computation of a ventilation flow velocity at which a high degree of ventilation is achievable. The following flow is performed for each of Examples 1 to 4. First, an area (assumed diameter) of a release opening portion of leakage gas in the fuel gas leakage risk portion 400 is determined (S11). Next, release characteristics of leakage gas in the fuel gas leakage risk portion 400 are computed (S12). The release characteristic are associated with a flow rate (ventilation flow rate Qc) of a ventilation flow required for diluting the flow rate of leakage gas to a concentration equal to or less than a lower flammability limit. Then, finally, a ventilation flow rate uw of a ventilation flow necessary for achieving a high degree of ventilation is derived based on the ventilation flow rate Qc (S13).

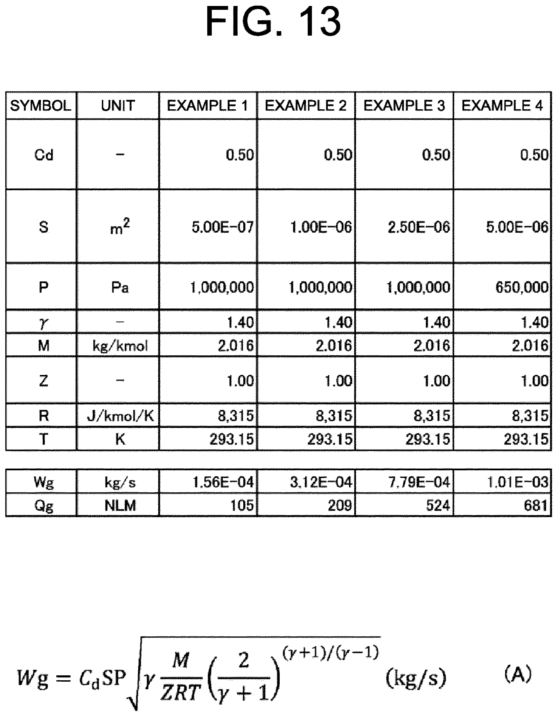

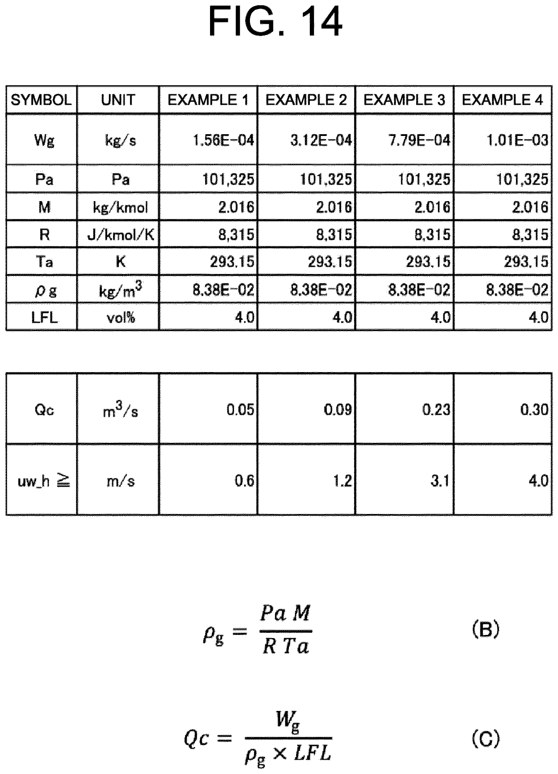

FIGS. 13 and 14 illustrate each parameter for use in computing the ventilation flow rate Qc, and a value of each parameter in Examples 1 to 4. Note that, in FIGS. 13 and 14, a value expressed by the format "AE-X" indicates "A×10-X". A content of each parameter is as follows.

Cd is an emission coefficient, which is a characteristic of a release opening portion. S denotes an area of the release opening portion. Note that, as the area, a value that is defined in advance as a recommended value by the above-mentioned standard is used for each leakage risk portion. P denotes a process pressure, specifically, a pressure within the first section 11 in which the fuel cell module 2 is installed. γ denotes a ratio of specific heat. M denotes a molar mass of a gas or vapor. Z denotes a compression factor. R denotes a gas constant. T denotes a temperature of a fluid, a gas, or liquid, and herein, the temperature is assumed to be 20 °C (293. 15K in absolute temperature). Wg denotes a mass release rate of gas, and is defined by equation (A) in FIG. 13. Qg denotes a volumetric release rate of gas. Note that, the unit NLM is an abbreviation of normal litter/min.

Pa denotes an atmospheric pressure. Ta denotes an ambient temperature, and herein, is assumed to be 20 °C (293. 15K in absolute temperature). ρg denotes a density of a gas or vapor, and is defined by equation (B) in FIG. 14. LFL denotes a lower flammability limit. Qc denotes a ventilation flow rate defined by equation (C) in FIG. 14. uw_h denotes a ventilation flow velocity necessary for achieving high dilution (high degree of ventilation) (_h means high dilution).

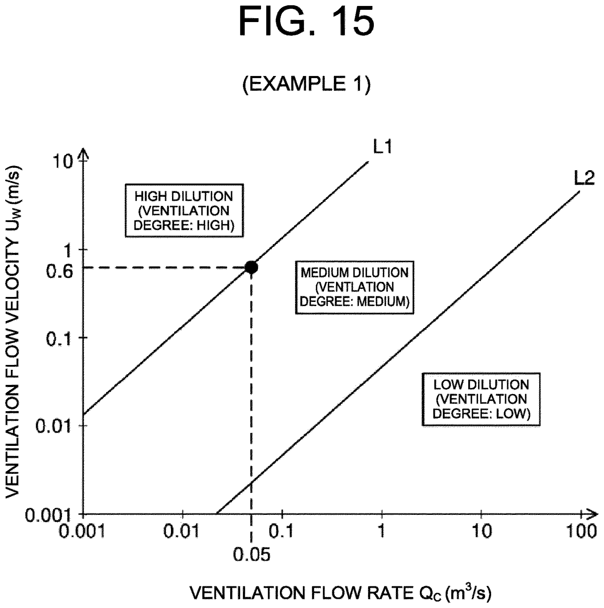

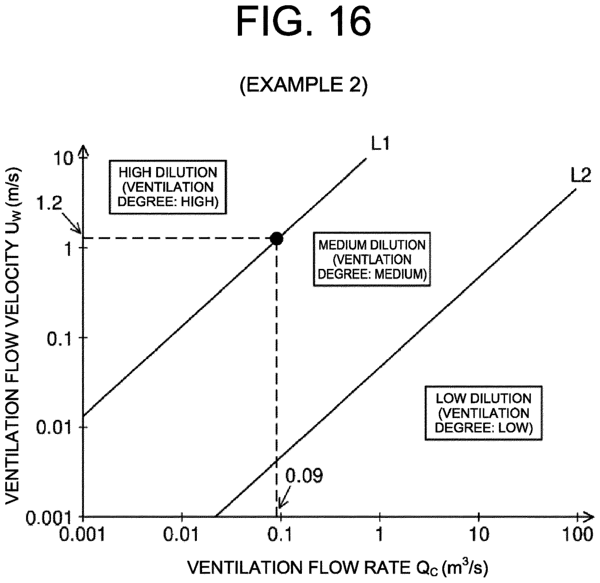

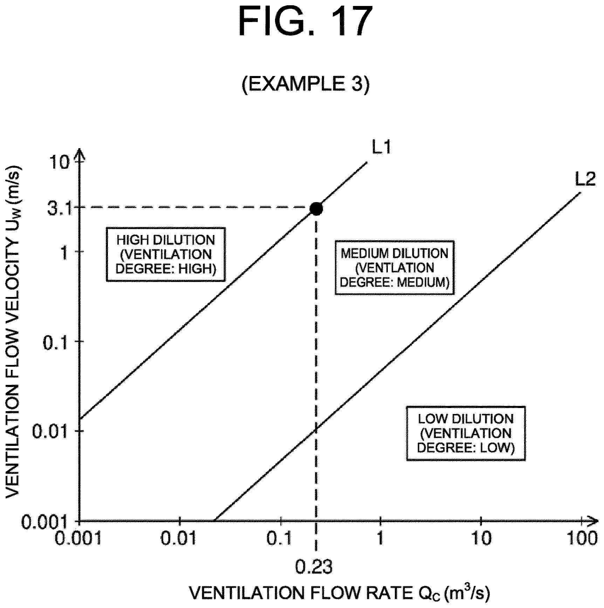

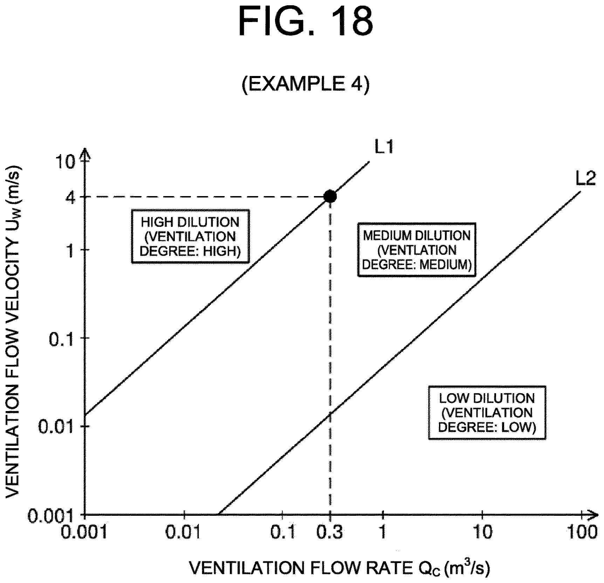

FIGS. 15 to 18 are diagrams in which each region of high dilution (ventilation degree: high), medium dilution (ventilation degree: medium), and low dilution (ventilation degree: low) defined by the ventilation flow rate Qc and the ventilation flow velocity uw is indicated, and the ventilation flow rate Qc derived by equation (C) is plotted on a coordinate plane in each of Examples 1 to 4. Note that, the vertical axis (ventilation flow velocity uw) and the horizontal axis (ventilation flow rate Qc) in FIGS. 15 to 18 are both logarithmic display. Further, a boundary L1 indicates a boundary between the high dilution region and the medium dilution region. A boundary L2 indicates a boundary between the medium dilution region and the low dilution region.

From these drawings, in order to achieve high dilution, specifically, a high degree of ventilation, it is necessary to achieve at least the ventilation flow velocity uw (specifically, uw_h) on the boundary L1 at a value of the ventilation flow rate Qc in Examples 1 to 4. In Examples 1 to 4, appropriately selecting and installing the ventilation flow generator 150 (for example, the blower fan 150a) capable of achieving the value of the ventilation flow velocity uw_h illustrated in FIG. 14 enables to achieve a high degree of ventilation within an installation section.

Achieving a high degree of ventilation within an installation section enables to classify the first section 11, which is an installation place for the fuel cell module 2, as a safety zone (Zone 2NE) on condition that ventilation effectiveness and the emission grade are satisfied, and the rules defined in each country are satisfied based on the above-mentioned standard. Thus, the non-explosion-proof fuel cell module 2 can be installed within the first section 11. Note that, ventilation effectiveness can be satisfied, for example, by constantly ventilating the inside of the housing 1 of the fuel cell system 100 by a ventilation fan on the hull side. Regarding the emission grade, since emission or leakage of fuel gas does not occur during a normal operation of the fuel cell system 100 in any of the fuel gas leakage risk portions 400 described in Examples 1 to 4, this condition can also be satisfied.

### <4. Supplementary Notes>

The fuel-cell system described in the present embodiment can also be expressed as a fuel cell system described in the following supplementary notes.

A fuel cell system of supplementary note (1) includes:
a fuel cell module including a fuel cell stack;
a fuel gas system that supplies a fuel gas to the fuel cell stack; and
a ventilation flow generator, wherein
the fuel gas system includes a fuel gas leakage risk portion, and
the ventilation flow generator generates a ventilation flow directed toward the fuel gas leakage risk portion.

A fuel cell system of supplementary note (2) is such that, in the fuel cell system according to supplementary note (1),
the fuel gas leakage risk portion includes at least one of a fuel gas pipe joint, a pipe flange, a valve, and a fuel pump.

A fuel cell system of supplementary note (3) further includes, in the fuel cell system according to supplementary note (1) or (2),
non-explosion-proof electrical equipment against the fuel gas, wherein
the ventilation flow generator directs the ventilation flow in a direction different from a direction of the non-explosion-proof electrical equipment.

A fuel cell system of supplementary note (4) is such that, in the fuel cell system according to supplementary note (3),
the fuel gas is a hydrogen gas, and
the non-explosion-proof electrical equipment is disposed below the at least one fuel gas leakage risk portion.

A fuel cell system of supplementary note (5) further includes, in the fuel cell system according to any one of supplementary notes (1) to (4):
a first section that stores the fuel cell module, the fuel gas system, and the ventilation flow generator;
a second section that stores an air intake portion of a cathode air system to be connected to the fuel cell module; and
a barrier wall that blocks a flow of air between the first section and the second section in a portion other than the cathode air system.

A fuel cell system of supplementary note (6) further includes, in the fuel cell system according to supplementary note (3),
an intake port and a ventilation port provided in the first section;
a ventilation device that ventilates the first section; and
a gas detector that detects a fuel gas concentration within the first section, wherein
an operation of the non-explosion-proof electrical equipment is stopped, when the gas detector detects the fuel gas concentration equal to or higher than a predetermined value.

A fuel cell system of supplementary note (7) is such that, in the fuel cell system according to any one of supplementary notes (1) to (6),
the ventilation flow generator is a blower fan.

A fuel cell system of supplementary note (8) is such that, in the fuel cell system according to any one of supplementary notes (1) to (6),
the ventilation flow generator is a suction fan.

A fuel cell system of supplementary note (9) is such that, in the fuel cell system according to any one of supplementary notes (1) to (8),
the fuel cell module and the fuel gas system are accommodated in a common housing,
the housing is connected to an external fuel gas pipe disposed outside the housing,
the external fuel gas pipe includes an inner pipe and an outer pipe,
the inner pipe is connected to the fuel gas system within the housing,
the outer pipe is disposed with a predetermined gap with respect to an outer peripheral surface of the inner pipe,
the gap between the inner pipe and the outer pipe is opened into the housing,
the ventilation flow generator includes a fluid introduction portion that introduces a ventilation fluid into the gap of the external gas pipe, and
the fuel gas leakage risk portion is located to overlap the gap between the inner pipe and the outer pipe, when viewed from a connection side of the external gas pipe with respect to the housing.

A fuel cell system of supplementary note (10) is such that, in the fuel cell system according to supplementary note (9),
the fuel cell module is located within the housing and on a side opposite to a connection side between the housing and the external fuel gas pipe with respect to the fuel gas leakage risk portion, and
a shielding plate is disposed between the fuel cell module and the fuel gas leakage risk portion.

The embodiment of the present invention has been described above, but the scope of the present invention is not limited thereto, and can be carried out by extending or modifying within a range that does not deviate from the gist of the present invention.

### INDUSTRIAL APPLICABILITY

The fuel cell system according to the present invention can be used for generation of electric power, for example, in a ship.

### REFERENCE SIGNS LIST

1 Housing
2 Fuel cell module
2a Fuel cell stack
2b Hydrogen supply pipe fastening joint (fuel gas leakage risk portion)
2c Hydrogen circulation pump (fuel gas leakage risk portion, fuel pump)
5A Fuel gas system
9 Air intake portion
11 First section
12 Second section
13 Partition wall (barrier wall)
51F Pipe flange (fuel gas leakage risk portion)
54 Shielding plate
83 Coolant pump (non-explosion-proof electrical equipment)
100 Fuel cell system
111 Intake port
112 Ventilation port
150 Ventilation flow generator
150a Blower fan
150b Suction fan
160 Gas detector
200 External hydrogen flow path (external fuel gas pipe)
201P Inner pipe
203 Outer pipe
204 Internal space (gap)
205 Fluid introduction portion
300 Ventilation device
400 Fuel gas leakage risk portion
421A Cathode air system
531 Upstream block valve (fuel gas leakage risk portion, valve)
532 Downstream block valve (fuel gas leakage risk portion, valve)
533 Bleed valve (fuel gas leakage risk portion, valve)

## Claims

1. A fuel cell system comprising:
a fuel cell module including a fuel cell stack;
a fuel gas system that supplies a fuel gas to the fuel cell stack; and
a ventilation flow generator, wherein
the fuel gas system includes a fuel gas leakage risk portion, and
the ventilation flow generator generates a ventilation flow directed toward the fuel gas leakage risk portion.

2. The fuel cell system according to claim 1, wherein
the fuel gas leakage risk portion includes at least one of a fuel gas pipe joint, a pipe flange, a valve, and a fuel pump.

3. The fuel cell system according to claim 1, further comprising
non-explosion-proof electrical equipment against the fuel gas, wherein
the ventilation flow generator directs the ventilation flow in a direction different from a direction of the non-explosion-proof electrical equipment.

4. The fuel cell system according to claim 3, wherein
the fuel gas is a hydrogen gas, and
the non-explosion-proof electrical equipment is disposed below the at least one fuel gas leakage risk portion which is included as the fuel gas leakage risk portion.

5. The fuel cell system according to claim 1, further comprising:
a first section that stores the fuel cell module, the fuel gas system, and the ventilation flow generator;
a second section that stores an air intake portion of a cathode air system to be connected to the fuel cell module; and
a barrier wall that blocks a flow of air between the first section and the second section in a portion other than the cathode air system.

6. The fuel cell system according to claim 3, further comprising:
an intake port and a ventilation port provided in the first section;
a ventilation device that ventilates the first section; and
a gas detector that detects a fuel gas concentration within the first section, wherein
an operation of the non-explosion-proof electrical equipment is stopped, when the gas detector detects the fuel gas concentration equal to or higher than a predetermined value.

7. The fuel cell system according to claim 1, wherein
the ventilation flow generator is a blower fan.

8. The fuel cell system according to claim 1, wherein
the ventilation flow generator is a suction fan.

9. The fuel cell system according to claim 1, wherein
the fuel cell module and the fuel gas system are accommodated in a common housing,
the housing is connected to an external fuel gas pipe disposed outside the housing,
the external fuel gas pipe includes an inner pipe and an outer pipe,
the inner pipe is connected to the fuel gas system within the housing,
the outer pipe is disposed with a predetermined gap with respect to an outer peripheral surface of the inner pipe,
the gap between the inner pipe and the outer pipe is opened into the housing,
the ventilation flow generator includes a fluid introduction portion that introduces a ventilation fluid into the gap of the external gas pipe, and
the fuel gas leakage risk portion is located to overlap the gap between the inner pipe and the outer pipe, when viewed from a connection side of the external gas pipe with respect to the housing.

10. The fuel cell system according to claim 9, wherein
the fuel cell module is located within the housing and on a side opposite to a connection side between the housing and the external fuel gas pipe with respect to the fuel gas leakage risk portion, and
a shielding plate is disposed between the fuel cell module and the fuel gas leakage risk portion.
